# EUROPÄISCHE PATENTSCHRIFT

(11) **EP 1 812 741 B1**
(45) Veröffentlichungstag und Bekanntmachung des Hinweises auf die Patenterteilung: **27.05.2009**
(21) Anmeldenummer: 05808165.4
(22) Anmeldetag: 17.11.2005
(51) Int. Cl.: F16L 9/12, F16L 9/128, B32B 1/08

(54) **KUNSTSTOFFROHR**
PLASTIC TUBE
TUYAU EN PLASTIQUE

(30) Priorität: 20.11.2004 DE 102004056192
(43) Veröffentlichungstag der Anmeldung: 01.08.2007
(60) Teilanmeldung: 08012984.4
(73) Patentinhaber: Knoch, Kern & Co., A-9020 Klagenfurt (AT)
(72) Erfinder: RINDERHOFER, Alexander, A-1180 Wien (AT)
(74) Vertreter: Becker, Thomas
(86) Internationale Anmeldenummer: PCT/EP2005/012310
(87) Internationale Veröffentlichungsnummer: WO 2006/053742

(56) Entgegenhaltungen:
- EP-A- 0 462 672
- EP-A- 1 393 890
- GB-A- 2 002 485

## Beschreibung

Die Erfindung betrifft ein Kunststoffrohr, dessen Rohrwand aus einer Außenschicht, einer Innenschicht und mindestens einer Zwischenschicht aufgebaut ist, wobei benachbarte Schichten verbunden sind.

Ein solches mehrschichtiges Rohr kann Durchmesser von 10 oder 30 cm, aber auch Durchmesser von mehreren Metern aufweisen.

Aus der EP 1 393 890 A1 sind mehrschichtige, koextrudierte Kunststoffrohre aus thermoplastischen Werkstoffen bekannt, wobei ein inneres Rohr durch eine verformbare geschäumte Schicht außenseitig geschützt wird.

Andere Rohre lassen sich beispielsweise im Schleuder- oder Schleudergussverfahren herstellen, wie es aus der gattungsbildenden EP 0 360 758 B1 bekannt ist. Dabei lassen sich Rohrstücke mit Längen von 6 Metern und mehr herstellen. Die Grundstoffe, beispielsweise aushärtbare Harze (insbesondere duroplastische Harze wie Polyesterharze), Füllstoffe und Glasfasern, werden in unterschiedlichen Masseanteilen zur Ausbildung der einzelnen Schichten über einen so genannten Feeder in eine rotierende Matrize geschleudert. Durch Aushärtung des Harzes wird ein quasi monolithischer Rohrkörper gebildet, der keine diskreten Schichten mehr aufweist. Mit der Aushärtung des duroplastischen Harzes erhält das Rohr seine Stabilität.

Die EP 0 360 758 B1 zeigt Beispiele für den Aufbau der verschiedenen Schichten. Die Anzahl und Zusammensetzung der einzelnen Schichten kann unter anderem von der Größe des Rohrs und dessen Verwendung abhängen. Der Stand der Technik skizziert beispielhaft die Unterschiede zwischen einem "Druckrohr", durch das eine Fluid unter Druck gefördert wird, und einem "drucklosen Rohr", beispielsweise einem Abwasserrohr.

Bei den meisten Anwendungen werden die Rohre unterirdisch verlegt und unterliegen verschiedenen mechanischen Beanspruchungen. Dies macht es erforderlich, dem an sich steifen Rohr eine gewisse Flexibilität zu geben, um beispielsweise eine Zerstörung bei Schlagbeanspruchung zu vermeiden.

Zu diesem Zweck sind Rohre der genannten Art bekannt, die einzelne Schichten aufweisen, die mit textilen Glasfasern armiert sind und/oder Zuschlagstoffe beziehungsweise Füllstoffe aufweisen. Durch die Rotation der Matrize bei der Herstellung lassen sich die einzelnen Schichten vor der abschließenden Härtung verdichten.

Mit diesen Maßnahmen wird die Stabilität des Rohres insgesamt verbessert. Die Rohre besitzen auch eine Widerstandsfähigkeit gegen Schlagbeanspruchung oder Durchbiegung, die für verschiedene Anwendungsbereiche ausreichend ist.

In diesem Zusammenhang ist folgender Test bekannt:

Ein Rohr wird auf einen V-förmigen Tisch gelegt, der das Rohr seitlich stabilisiert. Gewichte unterschiedlicher Masse (0,5 kg, 1 kg, 2 kg, 3 kg etc.) werden aus unterschiedlichen Höhen (üblicherweise 0,1 bis 2,4 Meter mit Intervallen von 0,1 Meter) auf die äußere Rohrfläche eines Rohres fallengelassen.

Bei jedem Test aus jeder Höhe werden 15 Wiederholungen durchgeführt.

Ein sichtbarer Riss auf der inneren Oberfläche des Rohrstücks wird als "Bruch" gewertet. Dabei lassen sich lineare Risse (meist in Umfangsrichtung des Rohres) von sternförmigen Rissen unterscheiden.

Bei der größten Höhe beziehungsweise dem größten Gewicht, bei dem bei allen 15 Wiederholungen kein Riss auf der inneren Oberfläche des Rohrs festgestellt werden kann, wird eine 100%ige Schlagbeständigkeit definiert.

Ein vollständiges Versagen wird dann angenommen, wenn bei allen 15 Wiederholungsversuchen sichtbare Risse zu beobachten sind.

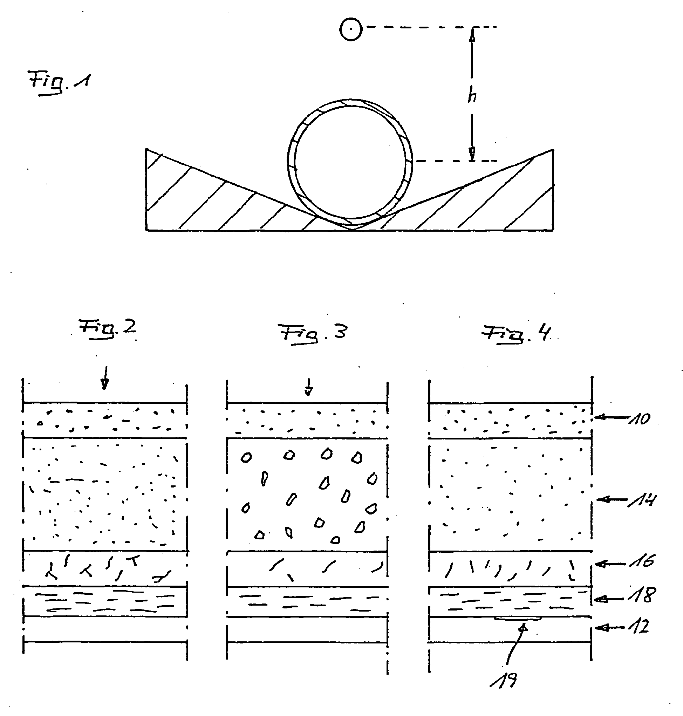

Der prinzipielle Aufbau der Testvorrichtung ist in FIG. 1 dargestellt.

Ziel der Erfindung ist es, ein im Schleuderverfahren hergestelltes Kunststoffrohr der beschriebenen Art zur Verfügung zu stellen, das eine größere Schlagfestigkeit als bisher bekannte Rohre aufweist. Solche Rohre werden für bestimmte Anwendungen gefordert, beispielsweise bei oberirdischer Verlegung.

Zur Lösung dieser Aufgabe wurden umfangreiche Versuche und Tests durchgeführt. Es wurde systematisch der Aufbau eines Rohres sowie der Aufbau einzelner Schichten untersucht. Es wurde der Einfluss der Grundstoffe auf die Widerstandsfähigkeit gegenüber Schlag ebenso geprüft wie die Veränderung der Dicke einzelner Schichten oder deren Abfolge.

Nachstehend wird von folgender Terminologie ausgegangen: Das Rohr besitzt eine Außenschicht (= äußere Deckschicht), eine innere Deckschicht (=Innenschicht) sowie mindestens eine Strukturschicht dazwischen, nachfolgend Zwischenschichten genannt. Alle Schichten enthalten zumindest einen Anteil eines duroplastischen Harzes und bilden zusammen nach der Aushärtung einen quasi monolithischen Rohrkörper, bei dem keine diskreten Schichten mehr vorhanden sind, das heißt, die bei der Herstellung sukzessive aufgebrachten Schichten sind nunmehr untereinander vernetzt.

Im Ergebnis liegt der Erfindung die Erkenntnis zugrunde, dass beispielsweise die Veränderung der Reihenfolge einzelner Zwischenschichten oder die Veränderung einzelner Parameter des Herstellungsverfahrens nur einen relativ geringen Einfluss auf die mechanischen Eigenschaften des Rohrs hat. Diese Eigenschaften des gesamten Rohres lassen sich aber dadurch entscheidend in Richtung höheren Schlagfestigkeit verbessern, dass mit Ausnahme der Innenschicht mindestens eine der weiteren Schichten (Außenschicht, Zwischenschichten) in ihren physikalischen Eigenschaften verändert wird.

Die Erfindung ist durch die Merkmale des Anspruchs 1 definiert. Weitere Merkmale der Erfindung sind in den abhängigen Ansprüchen angegeben.

Die Veränderung der physikalischen Eigenschaften der o.g. mindestens einen der weiteren Schichten (Außenschicht, Zwischenschichten), im Folgenden Funktionalschicht genannt, lässt sich auf zwei, im Ergebnis gleich wirkenden Wegen erreichen.
1. Variante: Die Funktionalschicht enthält ein duroplastisches Harz, das sich gegenüber einem Harz mindestens einer, radial innenseitig folgenden Schicht in mindestens einem der folgenden physikalischen Merkmale unterscheidet: der Elastizitätsmodul ist kleiner, die Bruchdehnung ist größer, die Erweichungstemperatur ist kleiner.
2. Variante: Die Funktionalschicht enthält mindestens einen Zuschlagstoff, der sich im Fall von Schlagenergie auf die Außenschicht des Rohrs irreversibel, insbesondere plastisch verformt.

Bei der 1. Variante wird das duroplastische Harz verändert, bei der 2. Variante die Zusammensetzung der Schicht. In beiden Fällen ergeben sich gleich wirkende Konsequenzen. Die Schlagfestigkeit des Rohrs insgesamt wird deutlich verbessert. Die Duktilität des Rohrs unter Last wird optimiert. Konkret ergeben sich insbesondere folgende Effekte bei mechanischer Belastung, insbesondere Schlagbeanspruchung des Rohrs:
- In der Funktionalschicht werden Risse, insbesondere Mikrorisse oder Ablösungen zwischen Zuschlagstoff und umgebendem Harz ausgebildet,
- in der Funktionalschicht werden Zonen, die von einem porösen oder verformbaren Zuschlagstoff ausgefüllt sind, deformiert,
- der Flächenverbund zwischen der Funktionalschicht und einer benachbarten Schicht wird zumindest partiell unterbrochen.

Eine Rissbildung, insbesondere eine Ausbildung von Mikrorissen, lässt sich insbesondere dadurch erreichen, dass die betreffende Funktionalschicht ein Harz enthält, dessen Elastizitätsmodul, Bruchdehnung und/oder Erweichungstemperatur sich im genannten Maß von den entsprechenden Werten eines Harzes mindestens einer, radial innenseitig folgenden Schicht unterscheidet.

Mikrorisse sind Risse mit einer Länge bis 1 mm, insbesondere bis 500 µm.

Dabei soll der Elastizitätsmodul nach einer Ausführungsform mindestens 25% kleiner als der der radial innen benachbarten Schicht sein. Die erwähnte Reduzierung kann nach Ausführungsformen aber auch > 33%, > 50%, > 66%, > 75% oder gar > 90% betragen.

So kann beispielsweise für eine als Funktionalschicht ausgebildete Zwischenschicht ein Harz mit einem Elastizitätsmodul von lediglich etwa 100 MPa und für die in Richtung auf die Innenschicht benachbarte Zwischenschicht ein Harz (Polyesterharz) mit einem Elastizitätsmodul von 2000-4000 MPa eingesetzt werden. Der dabei erfindungsgemäß erzielte Effekt ist unter anderem Folgender: Die durch Schlag eingebrachte Deformationswelle wird beim Übergang von der Funktionalschicht mit geringem E-Modul in die nachfolgende Schicht mit hohem E-Modul teilweise reflektiert, so dass nur ein Teil der Deformationsenergie weitergeleitet wird.

Die Auswahl des Harzes für eine Funktionalschicht kann alternativ oder kumulativ über dessen Bruchdehnung erfolgen, die größer sein sollte, als die des Harzes in der nach innen folgenden weiteren Schicht. Dabei kann das Harz der Funktionalschicht eine Bruchdehnung aufweisen, die mindestens 30% größer ist. Die Bruchdehnung kann aber auch > 50% oder > 100% als die Bruchdehnung des Harzes der "innen" benachbarten weiteren Schicht sein.

In konkreten Werten kann beispielsweise die Bruchdehnung einer inneren Zwischenschicht des Rohres 2-2,5% betragen, während die Bruchdehnung der nach außen benachbarten Zwischenschicht (Funktionalschicht) mindestens 5% beträgt, aber auch 10%, 20% oder gar 50% betragen kann.

Ein weiteres mögliches Kriterium für die Lösung der Aufgabe ist die Auswahl eines Harzes für die Funktionalschicht(en), dessen Erweichungstemperatur kleiner ist als die Erweichungstemperatur einer radial innenseitig folgenden Schicht. Während ein übliches Polyesterharz für bekannte geschleuderte Rohre eine Erweichungstemperatur (bestimmt gemäß ISO 75) von 100-130 °C aufweist, sollte die Erweichungstemperatur für das Harz der erfindungsgemäß gestalteten Funktionalschicht mindestens 20 % niedriger sein, wobei eine Verringerung um mehr als 30 % oder mehr als 50 % durchaus günstig ist. Entsprechend ist das Harz für diese Funktionalschicht weniger vernetzt und weist beispielsweise eine Erweichungstemperatur von < 80° C, < 50 ° C oder < 25 °C auf.

Die in einer Funktionalschicht bei mechanischer Last entstehenden Mikrorisse führen zu einer erheblichen Energiedämpfung und damit zu einer deutlichen Reduktion der elastischen Stoßenergie, die in die innen benachbarte Schicht weitergeleitet wird. Diese Funktionalschichten beeinflussen die weiteren, grundsätzlichen strukturellen Eigenschaften des Rohrs nicht. Die Mikrorisse oder Ablösungen haben keinen negativen Einfluss auf die Gebrauchseigenschaften des Rohrs insgesamt, da alle anderen Schichten so ausgebildet sind, dass die erforderlichen strukturellen Eigenschaften auch erfüllt sind, wenn die Funktionalschicht nicht vorhanden wäre.

Für den eingangs beschriebenen Schlagtest bedeutet dies, dass auf der Innenwand des Rohres deutlich weniger Risse bei gleichen Versuchsbedingungen im Verhältnis zu bekannten Rohren beobachtet werden.

Die Außenschicht und die Zwischenschicht(en) kann (können) neben dem Harz (Bindemittel) mindestens einen der folgenden weiteren Bestandteile enthalten:

In der Schicht kann ein Füllstoff verteilt sein, beispielsweise auf Basis SiO₂, MgO, CaO, Al₂O₃, MgCO₃, CaCO₃, Al (OH)₃, Talkum, Kaolin, BaSO₄, CaSO₄ oder Mischungen daraus. Dieser Füllstoff sollte üblicherweise eine Korngröße < 1,0 mm aufweisen, wobei Korngrößen unter 0,1 mm durchaus günstig sind.

Der Füllstoffanteil (innerhalb der jeweiligen Schicht) liegt nach einer Ausführungsform zwischen 25 und 250 Masse-%, bezogen auf den Harzanteil der jeweiligen Schicht.

Ebenso können die Außen- und Zwischenschichten Glasfasern (alleine oder zusammen mit Füllstoff) enthalten, beispielsweise Glasfasern einer Länge < 60 mm, wobei auch kürzere Glasfasern (< 30 mm oder < 15 mm) Verwendung finden können. Der Glasfaseranteil liegt nach einer Ausführungsform zwischen 5 und 70 Masse-%, bezogen auf die jeweilige Schicht.

Als Zuschlagstoffe für die Funktionalschicht(en) eigenen sich: Blähglas, Hohlglas, geblähter Perlit, geblähter Vermiculit, Bims, Kautschuk, Elastomere, Thermoplaste oder dergleichen, insbesondere mit einer Teilchengröße < 10 mm. Bei allen diesen Zuschlagstoffen handelt es sich um voluminöse, poröse, massearme beziehungsweise leicht verformbare Produkte geringer mechanischer Festigkeit. Die Festigkeit reicht einerseits aus, den Zuschlagstoff weitestgehend unzerstört und unverformt in der Harzmatrix zu verteilen. Die Festigkeit/Stabilität ist auf der anderen Seite aber so gering, dass bei einer entsprechenden Schlagbeanspruchung der Zuschlagstoff zerstört oder verformt wird. Dabei werden neue Fehlstellen (Hohlräume) veränderter Geometrie in der Schicht ausgebildet, insbesondere wenn der Zuschlag zerstört wird. Bei einem verformbaren, elastischen Zuschlag werden die Gefügezönen, in denen der Zuschlag liegt, unter Last deformiert. Beide Gefügeveränderungen sind irreversibel. Im letztgenannten Fall wird eine plastische Verformung des Zuschlags angestrebt. Es kann auch zu Ablösungen zwischen diesen Zuschlagteilchen und dem umgebenden Matrixmaterial kommen.

In verschiedenen Ausführungsformen kann die Teilchengröße des Zuschlagstoffes auch deutlich unter 10 mm liegen, beispielsweise < 6 mm, < 4 mm, < 2 mm, < 1 mm oder auch <0,5 mm.

Grundsätzlich gilt: Viele kleine Risse beziehungsweise viele kleine neue Hohlräume oder Gefügedeformationen fördern die Energiedämpfung mehr als wenige große Risse oder wenige große Hohlräume/Zonen.

Der Anteil der erwähnten Zuschlagstoffe beträgt 5 bis 50 Gew.-% oder bis zu 90 Volumenprozent, bezogen auf die jeweilige (gesamte) Zwischenschicht, wobei 60-80 Vol.-% oft ausreichend sein werden. Aber auch geringere Volumenanteile (bis 10, 20 oder 30 %) führen, wenngleich verringert, zu dem beschriebenen Effekt.

Der erwähnte Zuschlagstoff, der sich von der umgebenden Harzmatrix ablöst oder unter Krafteinwirkung verformt beziehungsweise zerbricht, lässt sich auch unabhängig vom Harz zur Bildung einer Funktionalschicht zu den genannten Zwecken einsetzen.

Insoweit kann sich ein Rohr ergeben, dessen Funktionalschicht analog zum Stand der Technik ein konventionelles Harz mit einem Elastizitätsmodul von beispielsweise 2.000-8.000 MPa aufweist, in dem jedoch mindestens einer der genannten Zuschlagstoffe verteilt ist. Die Art des Zuschlagstoffes, dessen Größe und sein Anteil an der Masse der gesamten Funktionalschicht kann den vorgenannten Angaben entsprechen.

Von außen nach innen betrachtet unterstützt es den erfindungsgemäßen Gedanken, wenn einer ersten Funktionalschicht der beschriebenen Art entweder eine zweite Funktionalschicht der beschriebenen Art folgt und/oder eine weitere Schicht (Zwischenschicht oder Innenschicht), die in besonderer Weise geeignet ist, einen Rissfortschritt aus der radial äußeren Schicht zu stoppen. Dies gilt im besonderen für Schichten, die neben Harz auch Glasfasern enthalten. Dabei ist es weiters von Vorteil, wenn ein Anteil der Glasfasern der weiteren Schichten in Axialrichtung des Rohres verläuft. Bei dieser weiteren inneren Schicht kann als Harz ein konventionelles Harz im Sinne der vorstehenden Beschreibung eingesetzt werden.

Als Innenschicht wird in der Regel eine reine Harzschicht verwendet, da für diese innere Schicht eine sehr glatte Oberfläche verlangt wird, entlang der das Fluid, beispielsweise Wasser, strömt. Für diese Innenschicht kann sowohl ein konventionelles duroplastisches Harz der beschriebenen Art, beispielsweise ein Polyesterharz auf Basis von Orthophthalsäure, Isophthalsäure, Terephthalsäure oder Tetrahydrophthalsäure verwendet werden wie auch beispielsweise ein Bisphenolharz, Vinylesterharz, Epoxyharz oder ein Polyurethanharz.

Weitere Merkmale der Erfindung ergeben sich aus den Merkmalen der Unteransprüche sowie den sonstigen Anmeldungsunterlagen.

Die Erfindung wird nachstehend anhand von verschiedenen Ausführungsbeispielen näher erläutert.

Dabei zeigen - jeweils in stark schematisierter Darstellung und nicht maßstäblich -:
- Figur 2:: Einen Schnitt durch eine Rohrwand in einer ersten Ausführungsform eines Kunststoffrohres,
- Figur 3:: Einen Schnitt durch eine Rohrwand in einer zweiten Ausführungsform eines Kunststoffrohres,
- Figur 4:: Einen Schnitt durch eine Rohrwand in einer dritten Ausführungsform eines Kunststoffrohres.

In den Figuren 2-4 ist jeweils ein Schnitt durch eine Rohrwand eines Kunststoffrohres dargestellt. Jedes dieser Kunststoffrohre besteht hier - beispielhaft- aus fünf Schichten, und zwar einer Außenschicht 10, einer Innenschicht 12, und dazwischen angeordneten Schichten 14, 16, 18.

In allen Beispielen besteht die Außenschicht 10 aus einer Mischung von 30 Gew.-% eines Polyesterharzes A (Elastizitätsmodul: 3.000 MPa, Zugfestigkeit: ca. 60 MPa, Bruchdehnung: ca. 2,5%) mit 70 Gew.-% Quarzsand der Kornfraktion < 1mm.

Die Innenschicht 12 besteht bei allen Beispielen ausschließlich aus einem Polyesterharz B mit einem Elastizitätsmodul von ca. 200 MPa, einer Zugfestigkeit von ca. 20 MPa, und einer Bruchdehnung von ca. 50 %.

Beim Ausführungsbeispiel nach Figur 2 sind die Zwischenschichten wie folgt aufgebaut:

Die der Außenschicht 10 benachbarte Zwischenschicht 14 besteht aus ca. 35 Gew.-% des Polyesterharzes B und ca. 65 Gew.-% Calciumcarbonat in einer Kornfraktion < 0,5 mm.

Die daran anschließende Zwischenschicht 16 wird von einer Mischung aus 40 Gew.-% eines Spezialharzes C und 60 Gew.-% Calciumcarbonat in einer Kornfraktion < 0,5 mm gebildet. Das Spezialharz C ist ein Polyester-Harz mit einem Elastizitätsmodul von ca. 500 MPa, einer Zugfestigkeit von ca. 30 MPa und einer Bruchdehnung von ca. 20 %.

Zwischen dieser Zwischenschicht 16 und der Innenschicht 12 ist eine weitere Zwischenschicht 18 ausgebildet, die aus ca. 50 Gew.-% Polyesterharz A, 10 Gew.-% feinteiligem Dolomit (< 1mm) und 40 Gew.-% Glasfasern mit einem Durchmesser von etwa 10 µm und einer Länge von 25 mm besteht. Dabei ist der Verlauf der Glasfasern überwiegend in Tangentialrichtung des Rohres.

Die durch einen Pfeil in Figur 2 gekennzeichnete Schlagenergie wird durch die Zwischenschichten 14, 16, 18 gedämpft, und hier insbesondere durch die Auswahl von Harzen mit unterschiedlichen, von "außen" nach "innen" jeweils höheren Elastizitätsmodulen. Die Zwischenschichten 14, 16 sind somit Funktionalschichten im vorstehend beschriebenen Sinne. Dabei kommt es beispielsweise im Bereich der Zwischenschicht 16 zur Ausbildung von Mikrorissen, die im Weiteren durch die folgende Zwischenschicht 18 gestoppt werden, so dass die Innenschicht 12 auch bei höheren Schlagbeanspruchungen weitestgehend unbeschädigt bleibt.

Bei Figur 2 sind im Bereich der Schicht 16 die Mikrorisse übertrieben groß schematisch symbolisiert. Übertrieben ist auch die symbolische Darstellung der Glasfasern im Bereich der Schicht 18 und deren Verlauf.

Beim Ausführungsbeispiel nach Figur 3 ist die der Außenschicht 10 folgende Zwischenschicht 14 als energiedämpfende Funktionalschicht ausgebildet und besteht aus dem erwähnten Spezialharz C, in dem Hohlglaskugeln mit einem Durchmesser < 2 mm verteilt sind, wobei der Volumenanteil der Hohlglaskugeln an der Gesamtschicht ca. 70 % beträgt.

Dieser Zwischenschicht 14 folgt eine Funktionalschicht 16, die analog der Zwischenschicht 16 gemäß Figur 2 gestaltet ist. Dies gilt auch für die Gestaltung der weiteren Zwischenschicht 18 vor der Innenschicht 12.

In noch größerem Umfang als beim Ausführungsbeispiel nach Figur 2 kann ein Rohr mit einem Wandaufbau gemäß Figur 3 Schlagenergie absorbieren. Die Funktionalschicht 14 mit Hohlglaskugeln spielt dabei eine wesentliche Rolle. Bei einer äußeren, beispielsweise radialen Schlagbeanspruchung kommt es zur Zerstörung der übertrieben groß dargestellten Hohlglaskugeln und damit zu einer Verformung oder Zerstörung der von den Hohlkugeln begrenzten Hohlräume im Gefüge der Schicht 14, wodurch Spannungen durch den Schlag abgebaut werden können.

Dieser Spannungsabbau setzt sich in der Schicht 16 fort.

Durch die "Vordämpfung" der Schlagenergie in der Schicht 14 werden im Vergleich zum Ausführungsbeispiel nach Figur 2 weniger Mikrorisse ausgebildet (symbolisch durch nur noch vier Rissdarstellungen erkennbar). Im Ergebnis kann ein solches Rohr einer erheblichen auch dauerhaften Schlagbeanspruchung widerstehen, ohne dass auf der Innenschicht 12 eine Rissbildung zu beobachten ist.

Der Rohrquerschnitt gemäß Figur 4 entspricht bezüglich der Außenschicht 10 und der Funktionalschicht 14 dem Beispiel nach Figur 2.

Die folgende Zwischenschicht 16 besteht dagegen aus reinem Spezialharz C der genannten Art, während die zwischen der Zwischenschicht 16 und Innenschicht 12 ausgebildete weitere Zwischenschicht 18 aus dem Spezialharz C (mit einer Erweichungstemperatur von 50 °C) in Kombination mit Glasfasern gebildet wird.

Im Bereich der Zwischenschicht 16 kommt es wiederum zur Ausbildung von Mikrorissen, sofern das Rohr einer entsprechenden Schlagbeanspruchung unterliegt, wobei der Rissfortschritt in Richtung auf die Innenschicht 12 durch die folgende weitere Zwischenschicht 18 gestoppt wird.

Darüber hinaus kann bei diesem Ausführungsbeispiel beobachtet werden, dass es zu einer partiellen Ablösung der Zwischenschicht 18 gegenüber der Innenschicht 12 im Grenzflächenbereich kommt, wie durch das Bezugszeichen 19 schematisch dargestellt.

Jede einzelne dieser Grenzflächenabtrennungen liegt im Bereich von maximal einigen mm². Durch mehrere solcher Ablösungen entlang der Grenzfläche zwischen den Schichten 18, 12 wird ein von außen startender Rissfortschritt an der Innenschicht 12 gestoppt.

Anstelle der in den Figuren schematisch dargestellten drei Zwischenschichten können auch nur zwei oder deutlich mehr als drei Zwischenschichten vorgesehen werden, wobei mindestens eine, besser mindestens zwei Zwischenschicht(en) als Funktionalschicht ausgebildet werden.

Durch die beschriebenen Maßnahmen erweisen sich erfindungsgemäß gestaltete Rohre hinsichtlich ihrer Widerstandsfähigkeit gegen Schlagbeanspruchung Rohren nach dem Stand der Technik überlegen.

Soweit vorstehend ein Elastizitätsmodul angegeben wurde, erfolgte dessen Bestimmung gemäß ISO 527.

Die angegebenen Zugfestigkeiten wurden gemäß ISO 178 bestimmt.

Die Angaben der Bruchdehnung folgten in Übereinstimmung mit ISO 527, ISO 178.

Die Erweichungstemperatur wird nach ISO 75A bestimmt.

## Patentansprüche

1. Im Schleuderverfahren oder Schleudergussverfahren hergestelltes Kunststoffrohr, dessen Rohrwand eine Außenschicht (10), eine Innenschicht (12) und mindestens eine Zwischenschicht (14, 16, 18) aufweist, wobei alle Schichten (10, 12, 14, 16, 18) zumindest einen Anteil eines duroplastischen Harzes enthalten und benachbarte Schichten untereinander vernetzt sind, **dadurch gekennzeichnet, dass** mindestens eine Schicht, ausgehnommen die Innenschicht (12), als Funktionalschicht ausgebildet ist, deren physikalische Eigenschaften durch folgendes Merkmal verändert wurden:
- die Funktionalschicht enthält ein duroplastisches Harz, das sich gegenüber einem duroplastischen Harz mindestens einer, radial innenseitig folgenden Schicht in mindestens einem der folgenden physikalischen Merkmale unterscheidet: der Elastizitätsmodul ist kleiner, die Bruchdehnung ist größer, die Erweichungstemperatur ist kleiner.

2. Kunststoffrohr nach Anspruch 1, dessen Funktionalschicht mindestens einen Zuschlagstoff enthält, der sich im Fall von Schlagenergie auf die Außenschicht (10) des Rohres irreversibel, insbesondere plastisch, verformt.

3. Kunststoffrohr nach Anspruch 1, bei dem der Elastizitätsmodul des duroplastischen Harzes der Funktionalschicht mindestens 25 % kleiner ist.

4. Kunststoffrohr nach Anspruch 1, bei dem der Elastizitätsmodul des duroplastischen Harzes der Funktionalschicht mindestens 50 % kleiner ist.

5. Kunststoffrohr nach Anspruch 1, bei dem die Bruchdehnung des duroplastischen Harzes der Funktionalschicht mindestens 30 % größer ist.

6. Kunststoffrohr nach Anspruch 1, bei dem die Erweichungstemperatur des duroplastischen Harzes der Funktionalschicht mindestens 50 % kleiner ist.

7. Kunststoffrohr nach Anspruch 1, dessen Funktionalschicht ein duroplastisches Harz enthält, das mindestens eine der folgenden Eigenschaften aufweist:
- einen Elastizitätsmodul zwischen 100 und 500 MPa,
- eine Zugfestigkeit zwischen 5 und 40 MPa,
- eine Bruchdehnung > 10 %,
- eine Erweichungstemperatur < 100 °C.

8. Kunststoffrohr nach Anspruch 2, bei dem mit Ausnahme der Innenschicht (12) mindestens eine Schicht (10, 14, 16, 18) neben einem duroplastischen Harz mindestens einen der folgenden weiteren Bestandteile enthält:
- Füllstoff auf der Basis SiO₂, MgO, CaO, MgCO₃, CaCO₃, Al₂O3, BaS04, Talkum, Kaolin, Al(OH)₃, CaSO₄ oder Mischungen daraus,
- Glasfasern.

9. Kunststoffrohr nach Anspruch 8, dessen Füllstoff eine Korngröße < 0,2 mm aufweist.

10. Kunststoffrohr nach Anspruch 8, dessen Füllstoffanteil 25 bis 250 Masse-% beträgt, bezogen auf den Harzanteil der jeweiligen Schicht (10, 14, 16, 18).

11. Kunststoffrohr nach Anspruch 8, dessen Glasfasern eine Länge < 60 mm aufweisen.

12. Kunststoffrohr nach Anspruch 8, dessen Glasfaseranteil 5 bis 70 Masse-% beträgt, bezogen auf die jeweilige Schicht (18).

13. Kunststoffrohr nach Anspruch 2, dessen Zuschlagstoff aus der Gruppe:
Blähglas, Hohlglas, geblähter Perlit, geblähter Vermiculit, Bims, Kautschuk, Elastomere, Thermoplaste, einzeln oder in Kombination besteht.

14. Kunststoffrohr nach Anspruch 2, dessen Zuschlagstoff eine Teilchengröße < 10mm aufweist.

15. Kunststoffrohr nach Anspruch 2, dessen Anteil an Zuschlagstoff 10 bis 90 Volumen-% beträgt, bezogen auf die jeweilige Schicht (14).

## Claims

1. Plastic tube produced by the centrifugal or centrifugal casting method, the tube wall of which has an outer layer (10), an inner layer (12) and at least one intermediate layer (14, 16, 18), wherein all layers (10, 12, 14, 16, 18) contain at least a proportion of a duroplastic resin and adjacent layers are linked to each other, **characterized in that** at least one layer, except for the inner layer (12), is configured as a functional layer, the physical characteristics of which were changed by the following feature:
- the functional layer contains a duroplastic resin which differs with respect to a duroplastic resin at least of one layer following radially on the inner side in at least one of the following physical features: the modulus of elasticity is smaller, the elongation at fracture is greater, the softening temperature is lower.

2. Plastic tube according to Claim 1, the functional layer of which contains at least one additive which in the event of impact energy onto the outer layer (10) of the tube deforms in an irreversible, in particular plastic, manner.

3. Plastic tube according to Claim 1, in which the modulus of elasticity of the duroplastic resin of the functional layer is at least 25% smaller.

4. Plastic tube according to Claim 1, in which the modulus of elasticity of the duroplastic resin of the functional layer is at least 50% smaller.

5. Plastic tube according to Claim 1, in which the elongation at fracture of the duroplastic resin of the functional layer is at least 30% greater.

6. Plastic tube according to Claim 1, in which the softening temperature of the duroplastic resin of the functional layer is at least 50% smaller.

7. Plastic tube according to Claim 1, the functional layer of which contains a duroplastic resin which has at least one of the following characteristics:
- a modulus of elasticity between 100 and 500 MPa,
- a tensile strength between 5 and 40 MPa,
- an elongation at fracture > 10%,
- a softening temperature < 100°C.

8. Plastic tube according to Claim 2, in which with the exception of the inner layer (12) at least one layer (10, 14, 16, 18) adjacent to a duroplastic resin contains at least one of the following further components:
- filler based on SiO₂, MgO, CaO, MgCO₃, CaCO₃, Al₂O3, BaSO4, talcum, kaolin, Al(OH)₃, CaSO₄ or mixtures thereof,
- glass fibres.

9. Plastic tube according to Claim 8, the filler of which has a grain size of < 0.2 mm.

10. Plastic tube according to Claim 8, the filler proportion of which is 25 to 250 % by mass, in relation to the resin proportion of the respective layer (10, 14, 16, 18).

11. Plastic tube according to Claim 8, the glass fibres of which have a length < 60 mm.

12. Plastic tube according to Claim 8, the glass fibre proportion of which is 5 to 70 % by mass, in relation to the respective layer (18).

13. Plastic tube according to Claim 2, the additive of which consists of the group: foam glass, hollow glass, expanded perlite, expanded vermiculite, pumice, rubber, elastomers, thermoplastics, singly or in combination.

14. Plastic tube according to Claim 2, the additive of which has a particle size < 10 mm.

15. Plastic tube according to Claim 2, the proportion of additive of which is 10 to 90 % by volume, in relation to the respective layer (14).

## Revendications

1. Tuyau en plastique fabriqué au cours d'un procédé de centrifugation ou d'un procédé de moulage par centrifugation, dont la paroi de tuyau comporte une couche extérieure (10), une couche intérieure (12) et au moins une couche intermédiaire (14, 16, 18), toutes les couches (10, 12, 14, 16, 18) contenant au moins une part de résine duroplastique et les couches voisines étant reliées entre elles, **caractérisé en ce qu'**au moins une couche, à l'exception de la couche intérieure (12), est conçue comme une couche fonctionnelle, dont les propriétés physiques ont été modifiées par la caractéristique suivants :
- la couche fonctionnelle contient une résine duroplastique, qui se différencie de la résine duroplastique d'au moins une couche radialement consécutive du côté intérieur, par au moins l'une des caractéristiques physiques suivantes : le module d'élasticité est inférieur, l'allongement à la rupture est supérieur, la température de ramollissement est inférieure.

2. Tuyau en plastique selon la revendication 1, dont la couche fonctionnelle contient au moins un adjuvant qui se déforme de façon irréversible, notamment plastique, dans le cas d'une énergie de rupture sur la couche extérieure (10) du tuyau.

3. Tuyau en plastique selon la revendication 1, dans lequel le module d'élasticité de la résine duroplastique de la couche fonctionnelle est inférieur d'au moins 25%.

4. Tuyau en plastique selon la revendication 1, dans lequel le module d'élasticité de la résine duroplastique de la couche fonctionnelle est inférieur d'au moins 50%.

5. Tuyau en plastique selon la revendication 1, dans lequel l'allongement à la rupture de la résine duroplastique de la couche fonctionnelle est supérieur d'au moins 30%.

6. Tuyau en plastique selon la revendication 1, dans lequel la température de ramollissement de la résine duroplastique de la couche fonctionnelle est inférieure d'au moins 50%.

7. Tuyau en plastique selon la revendication 1, dont la couche fonctionnelle contient une résine duroplastique possédant au moins l'une des propriétés suivantes :
- un module d'élasticité compris entre 100 et 500 MPa,
- une résistance à la traction comprise entre 5 et 40 MPa,
- un allongement à la rupture supérieur à 10%,
- une température de ramollissement inférieure à 100°C.

8. Tuyau en plastique selon la revendication 2, dans lequel au moins une couche (10, 14, 16, 18), à l'exception de la couche intérieure (12), contient, en plus d'une résine duroplastique, au moins l'un des composants suivantes :
- une matière de charge à base de SiO₂, de MgO, de CaO, de MgCO₃, de CaCO₃, d'Al₂O₃, de BaSO4, de talc, de kaolin, d'Al(OH)₃, de CaSO₄ ou d'un mélange de ceux-ci,
- des fibres de verre.

9. Tuyau en plastique selon la revendication 8, dont la matière de charge présente une taille de grain inférieure à 0,2 mm.

10. Tuyau en plastique selon la revendication 8, dont la part de la matière de charge s'élève de 25 à 250% en termes de masse par rapport à la part de résine de chacune des couches (10, 14, 16, 18).

11. Tuyau en plastique selon la revendication 8, dont les fibres de verre présentent une longueur inférieure à 60 mm.

12. Tuyau en résine selon la revendication 8, dont la part de fibres de verre s'élève de 5 à 70% en termes de masse par rapport à la couche (18) correspondante.

13. Tuyau en plastique selon la revendication 2, dont l'adjuvant est issu du groupe suivant : verre expansé, verre creux, perlite expansé, vermiculite expansé, pierre ponce, caoutchouc, élastomère, thermoplaste, séparément ou combinés.

14. Tuyau en plastique selon la revendication 2, dont l'adjuvant présente une taille de particules inférieure à 10 mm.

15. Tuyau en plastique selon la revendication 2, dont la part d'adjuvant s'élève de 10 à 90% en termes de volume par rapport à la couche correspondante (14).
